# EUROPEAN PATENT APPLICATION

(11) **EP 0 962 882 A2**
(43) Date of publication of application: **08.12.1999**
(21) Application number: 99304167.2
(22) Date of filing: 28.05.1999
(51) Int. Cl.: G06K 19/06

(54) **Colour coding method for storing and retrieving objects**

(30) Priority: 06.06.1998 GB 9812111
(71) Applicant: Worcester Heat Systems Limited, Warndon, Worcester WR4 9SW (GB)
(72) Inventor: Shelsen, Lowe Christopher, Worcestershire, WR14 1DD (GB)
(74) Representative: Higgins, Michael Roger

(57) **Abstract**

A method of colour coding items within a range of items such as a range of elastomeric O-rings, in which each item therein is uniquely identified, the method including the steps of compiling a look-up table divided into a plurality of individual colours, each colour representing a particular group of items in the range, and sub-dividing each colour group by numbers each of which are represented by discrete areas of the colour used in the group, and subsequently marking individual items with the type of colour and number of discrete coloured areas to thereby uniquely identify each such item with reference to the look-up table in accordance with the characteristics of each item.

## Description

This invention relates to a method of colour coding objects for ease of storage and retrieval.

Colour coding is a well known method of identifying particular characteristics of individual items in a range of such items which may otherwise be difficult to differentiate. A typical example is the use of coloured paint applied to the exterior of drill bits to indicate intended purpose or metallic composition, with red point often being used to indicate a drill bit having a tungsten carbide tip suitable for use with masonry.

A drawback of colour coding as a general concept is that there are limitations on the number of colours available for use and hence where there are relatively large numbers of individual items in a complete range of such items the tendency has been to seek an alternative coding method, such as by stamping, moulding or printing a part number onto the item concerned which, by reference to a comparison table, an then be identified for subsequent use. However, this can be particularly inconvenient where some or all of the items in the range are relatively small or, because of the material from which they are made the number is difficult to read, an example being in the use of coding systems for differentiating O-rings made of elastomeric materials such as rubber and synthetic rubber.

O-rings are used extensively in apparatus where one or more types of fluid are present such as gas fired heating systems for domestic or industrial use. A typical range of O-rings for use in a wide variety of applications in the heating and plumbing industry would have 40 or 50 O-rings varying according to factors such as external diameter, internal diameter, thickness of the ring and type of elastomer used so that there may easily be three O-rings in the range of the same size, such as outside diameter, which would typically be coloured black but which each have different characteristics so that only one of the three would be suitable for a particular application. Although each can be traditionally differentiated by the use of a unique part number, it will be appreciated that reading the number presents a problem where the O-ring is already very small in size such that, as a general rule, applying unique part numbers to small items in a large range of items can be very inconvenient. If the person selecting the item has difficulty in reading the part number there is a correspondingly high risk that the wrong item will be selected from the range and used in the apparatus.

This problem can be overcome by the use of a colour coding system using a variety of different colours but the application of several colours to a small item then becomes problematic, with the consequent need to correlate colour combinations with all of the items in the range.

The present invention is derived from the realisation that a colour coding method can be used for storing and retrieving items within a range of items where only one colour is used on each and in which every item in the range can be easily and uniquely identified by reference simply to the colour and pattern.

According to the invention there is provided a method of colour coding items within a range of items in which each item therein is uniquely identified, the method including the steps of compiling a look-up table divided into a plurality of individual colours, each colour representing a particular group of items in the range, and sub-dividing each colour group by numbers each of which are represented by discrete areas of the colour used in the group, and subsequently marking individual items with the type of colour and number of discrete coloured areas to thereby uniquely identify each such item with reference to the look-up table in accordance with the characteristics of each item.

With this method it is therefore possible to mark items such as O-rings in an easily identifiable manner using only one colour for each O-ring but by applying the mine colour to a number of different areas in accordance with the look-up table. For example, an O-ring may be over-printed or painted on the right-hand-side thereof by three adjacent red areas of colour indicating an O-ring with a particular set of characteristics such as size and type of material used, whereas another O-ring having different characteristics may have three red strips on the left and three on the right, or simply three on the left, and so on. Using this principle, where the range of items includes very small items and relatively large items, the smaller items in the range can be selected to be over-printed or over painted with simple coding such as a single stripe on one side or a single stripe on both sides such that with the use of only a relatively small number of different colours a relatively large number of very small items in the range can be uniquely identified, with the frequency of the occurrence of discrete areas of the colour increasing with the size of the item in the range.

Conveniently, the look-up table may itself contain reference to a particular part number for each item in the range and/or may include additional information such as external diameter, thickness of the ring, internal diameter, type of material used, and so on. Where only a part number is given it would then, of course, sometimes be necessary to look-up the physical characteristics of the O-ring but in most cases this would not be because where, for example, a boiler is being serviced and a number of O-rings need to be replaced the service manual for the boiler will usually give the part number to be used and hence by simple reference to the look-up table an O-ring can be easily identified as being the correct one for use in the installation.

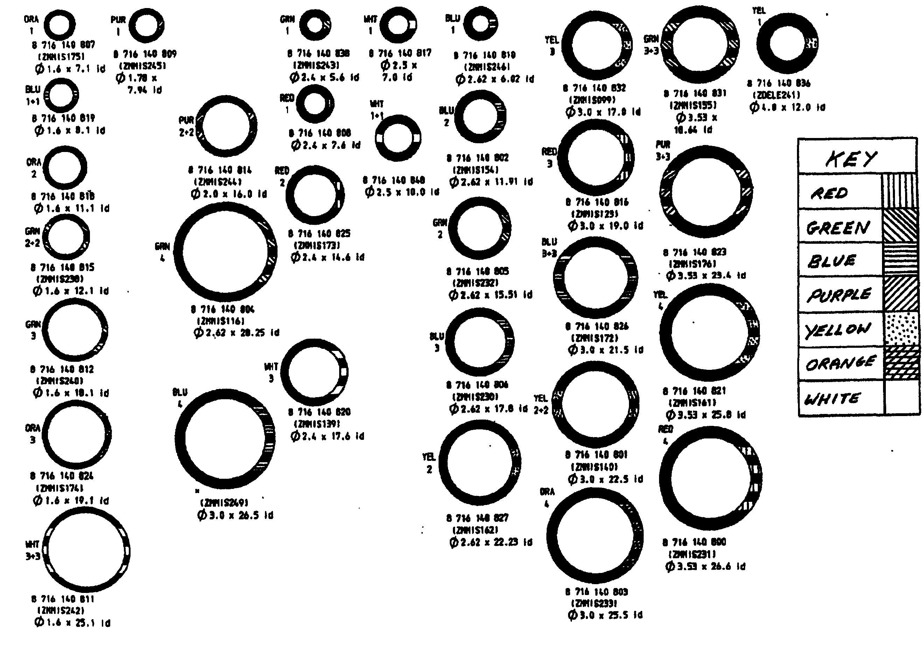

The invention will now be described, by way of example only, with reference to the accompanying drawing of a look-up table for use in the method of the invention and wherein individual colours are shown in heraldic shading, as indicated in the Key.

In the drawing a complete range of individual O-rings are shown depicted on a look-up table, adjacent to each of which are a description of the colour being used, the frequency of use, along with the part number of the O-ring and size. Commencing at the top left-hand-side of the table the first O-ring has only one discrete area where it has been over-printed, using conventional techniques, with the colour purple, indicated by reference to "PUR 1". Below the O-ring is a part number and details of the size, being in this instance an internal diameter of 7.94 mm. and a thickness of 1.78 mm. Similarly, moving on from left to right across the table other small O-rings are identified with reference to a single colour, in sequence being green, white and blue. Moving further on along the upper portion of the look-up table a larger O-ring of thickness 3 mm. and internal diameter 17 mm. is uniquely identified with three yellow stripes on the right-hand-side of the O-ring and the next one along, moving again from left to right, is uniquely identified with three green stripes on the left-hand-side and three green stripes on the right-hand-side of the O-ring.

Although, in this example, only 31 O-rings are shown in the look-up table, it will be readily apparent that using up to 4 coloured areas on each side of the O-ring i.e. the left-hand-side and the right-hand-side, allows the look-up chart to uniquely identify up to 56 O-rings in the range by the use of only 7 colours, one for each group and it is thereafter a relatively simple matter for an O-ring to be retrieved from storage, checked against the look-up table to ensure that it corresponds with the correct part number and then used as necessary.

The method according to the invention is particularly useful where circumstances make it otherwise difficult to ascertain that the correct item within a range of similar items is being used, such as on-site when lighting conditions may not be favourable to read part numbers or other forms of identification. Using the method of the invention it is simply necessary for the correct colour code to be ascertained from the look-up table for the particular circumstances, which correct code may conveniently be referred to in service manuals etc., and then to simply select the item in the range corresponding to that colour code with, thereafter, absolute certainty that it is the correct item to use.

The method of the invention is also particularly convenient to apply to items such as O-rings since only one colour may be used for each group of items in the range and by differentiating individual items in each group by the use of discrete coloured areas corresponding to a unique number it is relatively easy to over-print or over-paint areas on the item such as either or both of an O-ring with adjacent stripes corresponding to the item being marked.

## Claims

1. A method of colour coding items within a range of items in which each item therein is uniquely identified, the method including the steps of compiling a look-up table divided into a plurality of individual colours, each colour representing a particular group of items in the range, and sub-dividing each colour group by numbers each of which are represented by discrete areas of the colour used in the group, and subsequently marking individual items with the type of colour and number of discrete coloured areas to thereby uniquely identify each such item with reference to the look-up table in accordance with the characteristics of each item.

2. A method according to Claim 1 in which the look-up table may itself contain reference to a particular part number for each item in the range and/or may include additional information such as external diameter, thickness of the ring, internal diameter, type of material used, and so on.

3. A method according to Claim 1 or Claim 2 in which the colour coding is applied to O-rings.

4. A method according to Claim 3 in which the O-rings are marked by being over-printed or painted in specified areas corresponding to the areas specified by the look-up table.

5. A method according to Claim 4 in which the O-rings are marked using one or more stripes of a colour specified in the look-up table.

6. A method of colour coding items within a range of items substantially as hereinbefore described.
